# EUROPÄISCHE PATENTSCHRIFT

(11) **EP 1 619 408 B1**
(45) Veröffentlichungstag und Bekanntmachung des Hinweises auf die Patenterteilung: **30.07.2008**
(21) Anmeldenummer: 03748881.4
(22) Anmeldetag: 01.10.2003
(51) Int. Cl.: F16F 9/00, F16F 9/512

(54) **VERFAHREN ZUR REGELUNG DES HYDRAULISCHEN WIDERSTANDES EINES STOSSDÄMPFERS WÄHREND SEINES BETRIEBS**
METHOD FOR REGULATING HYDRAULIC RESISTANCE OF A SHOCK ABSORBER DURING THE OPERATION THEREOF
PROCEDE POUR REGULER LA RESISTANCE HYDRAULIQUE D'UN AMORTISSEUR LORS DU FONCTIONNEMENT DE CE DERNIER

(30) Priorität: 21.01.2003 UA 03010548; 06.06.2003 UA 03065259
(43) Veröffentlichungstag der Anmeldung: 25.01.2006
(73) Patentinhaber: Pereverzev, Viktor Hennadievich, Dnepropetrovsk, 49108 (UA); Yerkovych, Valentyn Antonovych, Dnepropetrovsk 49000 (UA)
(72) Erfinder: Pereverzev, Viktor Hennadievich, Dnepropetrovsk, 49108 (UA)
(74) Vertreter: Jaap, Reinhard
(86) Internationale Anmeldenummer: PCT/UA2003/000033
(87) Internationale Veröffentlichungsnummer: WO 2004/065816

(56) Entgegenhaltungen:
- EP-A- 0 992 705
- DE-A1- 2 503 247
- DE-A1- 2 721 933
- DE-A1- 3 813 402
- DE-A1- 3 923 512
- DE-A1- 4 238 728
- DE-B- 1 264 165
- RU-C1- 2 020 310
- RU-C1- 2 145 010
- RU-C1- 2 145 011
- US-A- 3 598 205
- US-A- 4 993 522

## Beschreibung

### Das technische Anwendungsgebiet

Die Erfindung bezieht sich auf den Transportmaschinenbau und im Einzelnen auf Stoßdämpferanlagen an einer Aufhängung. Sie kann in vorderen und hinteren Stoßdämpfern von Automobilen und in anderer Technik eingesetzt werden

### Der bisherige Stand der Technik

Bekannt sind Verfahren zur Regulierung des hydraulischen Widerstandes von Stoßdämpfern unter Ausnutzung regulierender Einrichtungen, die fixierte Positionen haben und eine Umschalteinrichtung von außen. Zum Beispiel wird in Stoßdämpfern vom Typ Bilstain die Arbeitshärte durch Rotation eines zylindrischen Körpers reguliert, der durch die Kolbenstange hindurch geht und die Durchlassfähigkeit des Kolbens in der einen oder anderen Richtung öffnet oder schließt, wobei fixierte Härtewerte vorliegen.
Der Nachteil der bekannten Verfahren besteht darin, dass durch die Reguliereinrichtung nur ein bestimmter Wert für die Härte eingestellt werden kann, der sich im Arbeitsprozess des Stoßdämpfers nicht verändert.
Daraus ergeben sich:
- eine niedrige Betriebssicherheit beim Fahren eines Autos auf welligen Straßenbelägen
- Erschütterungen, Stöße und mangelnder Komfort bei mittleren und höheren Geschwindigkeiten
- Instabilität und schlechte Lenkbarkeit des Automobils auf Straßen mit hoher Schwingungsfrequenz

### Darlegung der Erfindung

Die Aufgabe der vorgeschlagenen Erfindung besteht in der Erhöhung der Betriebssicherheit eines Stoßdämpfers und in der Erhöhung der Stabilität und des Komforts eines Automobils bei der Bewegung unter schwierigen Straßenbedingungen durch ein neues Verfahren zur Sicherstellung der Regulierung des hydraulischen Widerstandes und demzufolge der Härte des Stoßdämpfers im Arbeitsprozess bei unterschiedlichen Straßenverhältnissen und in Abhängigkeit von der Beladung des Automobils.

Das technische Resultat wird dadurch erreicht, dass man bei dem Verfahren der Regulierung des hydraulischen Widerstandes des Stoßdämpfers im Arbeitsprozess, welches ein zwangsweises Überströmen der Betriebsflüssigkeit durch kleine Querschnitte aus der Kammer ohne Kolbenstange in die Kolbenstangenkammer und zurück einschließt, erfindungsgemäß Durchgangsquerschnitte mit veränderlicher Durchlassfähigkeit schafft, welche durch die Anwendung von sich gegenseitig verschiebender Dosierelemente erreicht wird, wobei die Durchlassfähigkeit verändert wird aufgrund der Einwirkung der Veränderungen der Differenz zwischen den hydraulischen Drücken in der Kolbenstangenkammer und der Kammer ohne Kolbenstange, die bei der Veränderung der Belastung auf die Stoßdämpfer entstehen.

Dabei erhöht sich oder verringert sich der hydraulische Widerstand und infolge dessen die Arbeitshärte des Stoßdämpfers in Abhängigkeit von der Erhöhung oder Verringerung des Druckunterschiedes zwischen der Kolbenstangenkammer und der Kammer ohne Kolbenstange innerhalb des Stoßdämpfers. Bei der Erhöhung der Druckdifferenz zwischen der Kolbenstangenkammer und der Kammer ohne Kolbenstange erhöht sich die Kraft des hydraulischen Widerstandes und dementsprechend bei der Verringerung der Druckdifferenz verringert sich die Kraft des hydraulischen Widerstandes des Stoßdämpfers.

### Kurze Beschreibung der Zeichnungen

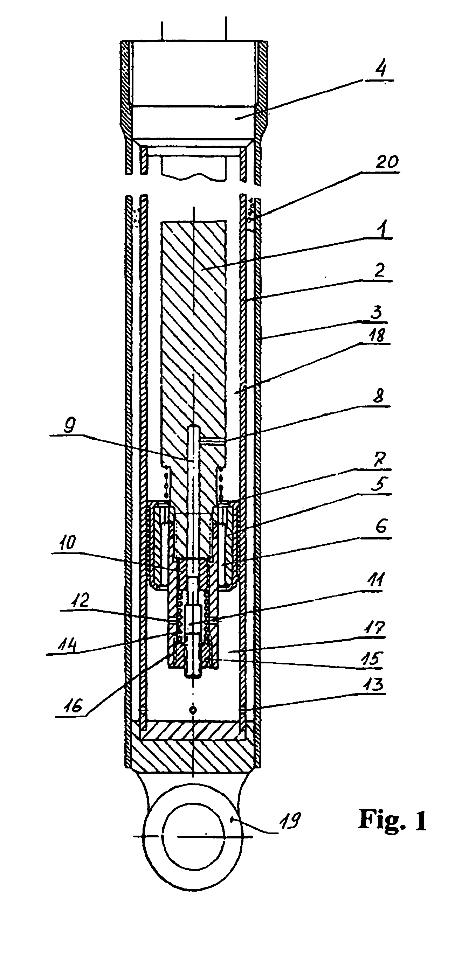

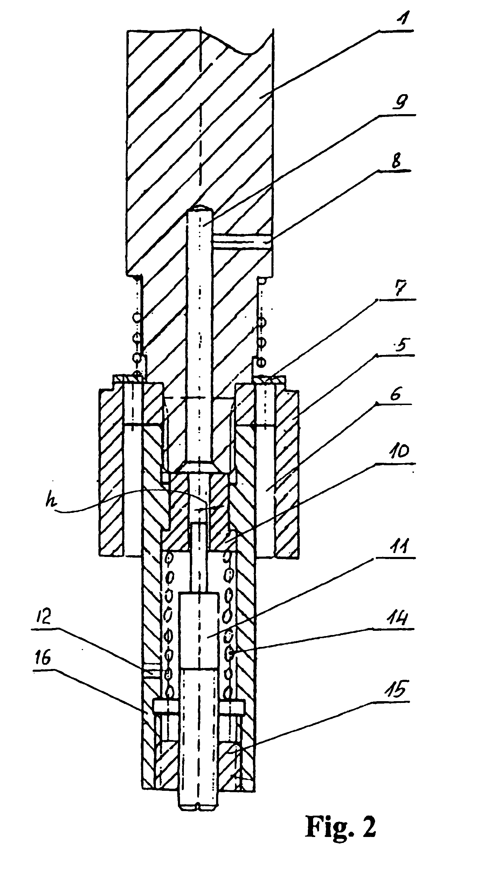

In der Abb. 1 wird die Gesamtansicht der Konstruktion eines Stoßdämpfers gezeigt, mit dem das angemeldete Verfahren realisiert werden kann. In der Abb. 2 wird die Konstruktion einer Baugruppe mit einer Reguliereinrichtung in vergrößertem Maßstab gezeigt.

Der Stoßdämpfer besteht aus der Kolbenstange 1, dem Arbeitszylinder 2, dem äußeren Behälter 3, dem oberen Monoblock 4, der als Führung für die Kolbenstange und die Dichtung dient, aus dem Kolben 5, dem Regulierkolben 10, der durch die Feder 14 abgefedert wird, aus der Regulierkolbenstange 11 und aus dem Zylinder 16 mit der Reguliermutter 15.

Die Regulierkolbenstange 11 ist teilweise innerhalb des Regulierkolbens 10 mit dem Spiel h angeordnet, welches einen kleinen Durchlassquerschnitt mit einer veränderbaren Durchlassfähigkeit bildet, die sich in Abhängigkeit von der Tiefe des Eintauchens der Regulierkolbenstange 11 in den Regulierkolben 10 verändert.

### Die optimale Variante zur Realisierung der Erfindung

Das Verfahren wird folgendermaßen realisiert:

Beim Zusammendrücken bewegt sich der Kolben 1 des Stoßdämpfers nach unten und das Auge 19 nach oben. Dabei bewegt sich die Betriebsflüssigkeit aus der Kammer ohne Kolbenstange 17 in die Kolbenstangenkammer 18, indem sie den kleinen Wiederstand der Scheibe 7 über die Kanäle 6 im Kolben 5 überwindet. Ein Teil der Betriebsflüssigkeit wird durch das Volumen der Stoßdämpferkolbenstange aus der Kammer ohne Kolbenstange durch die Kanäle 13 in den äußeren Behälter 3 gedrückt, wobei sie dabei das in diesem befindliche Gas 20 komprimiert..

Bei der Dekompression des Stoßdämpfers (Rückstoßhub) bewegt sich die Kolbenstange 1 des Stoßdämpfers nach oben und das Auge 19 nach unten. Dabei sind die Kanäle 6 im Kolben 5 durch die gefederte Scheibe 7 abgedeckt. Die Flüssigkeit gelangt durch die Dosieröffnung 8 in den Kanal 9 innerhalb der Kolbenstange 1 des Stoßdämpfers und gelangt zum Dosierkolben 10, wo sie auf großen Widerstand trifft, indem sie durch den geringen Durchlassquerschnitt des Spieles h zwischen den Innenwänden des Dosierkolbens 10 und der Dosierkolbenstange 11 hindurch tritt, wonach sie durch die Kanäle 12 des Zylinders 16 in die der Kolbenstange gegenüber liegenden Kammer 17 austritt. Ein Teil der Flüssigkeit wird durch das Gas 20 verdrängt und tritt durch die Kanäle 13 aus dem äußeren Behälter 3 in die der Kolbenstange gegenüber liegenden Kammer 17 ein. Bei äußerst starken Anstiegen der Belastung erzeugt die Betriebsflüssigkeit über dem Regulierkolben 10 einen Druck, der den Druck der Feder 14 übersteigt und es erfolgt eine Verschiebung des Regulierkolbens 10 nach unten. Dabei tritt die Regulierkolbenstange 11 tiefer in den Regulierkolben 10 ein, wobei er die Länge des Spieles zwischen diesen vergrößert und damit folgerichtig die Durchlassfähigkeit des Durchgangsquerschnitts verringert. Dabei erhöht sich der Fließwiderstand beim Überströmen der Flüssigkeit, was den Widerstand des Stoßdämpfers erhöht. Auf diese Weise erfolgt die Regulierung des hydraulischen Widerstandes des Stoßdämpfers im Arbeitsprozess.

Aus diesem Grunde hat die Anwendung des vorgeschlagenen Verfahrens folgende Vorteile: Keine Verzögerung bei der Dämpfung von Stoßdämpfern, die Möglichkeit der Anwendung von weicheren Stoßdämpfern für Hochgeschwindigkeitsautomobile und die Erhaltung der Lenkfähigkeit eines Automobils bei großen Belastungen auf dem Stoßdämpfer.

Ausgeschlossen wird eine Erschütterung und mangelnder Komfort bei der Bewegung von Automobilen auf gehobelten oder mit Kies bedeckten Straßen. Die Lenkbarkeit bei der Bewegung der Automobile wird bei beliebigen Straßenverhältnissen bedeutend verbessert.

Durch die Anwendung des Verfahrens erreicht man die geforderten Parameter für die Veränderung der Härte und den Komfort für verschiedene Automobile und für andere Technik, indem man die Durchlassfähigkeit der Durchgangsquerschnitte verändert.

Die vorgeschlagene Einrichtung kann leicht in bekannte Konstruktionen von hydraulischen und hydropneumatischen Stoßdämpfern in inländischen und ausländischen Automobilen eingerüstet werden.

### Liste der Bezugszeichen

1. Kolbenstange
2. Arbeitszylinder
3. äußerer Behälter
4. oberer Monoblock
5. Kolben
6. Kanal
7. Scheibe
8. Dosieröffnung
9. Kanal
10. Dosierkolben
11. Dosierkolbenstange
12. Kanal
13. Kanal
14. Feder
15. Reguliermutter
16. Zylinder
17. Kolbenstange
18. Kolbenstangenkammer
19. Auge
20. Gas

## Patentansprüche

1. Verfahren zur Regulierung des hydraulischen Widerstandes eines Stoßdämpfers im Arbeitsprozess, das ein zwangsweises Überströmen der Betriebsflüssigkeit durch kleine Durchgangsquerschnitte (6, h) aus der der Kolbenstange (1) gegenüber liegenden Kammer (17) in die Kolbenstangenkammer (18) und zurück einschließt,
**dadurch gekennzeichnet dass** für eine Durchflussrichtung eine Drosselstelle (h) mit einem Drosselquerschnitt und stufenlos veränderbaren Durchflusswiderständen geschaffen wird, die durch die Anwendung sich gegenseitig verschiebender Dosierelemente (10, 11) erzielt wird, und dass man die Durchflusswiderstände durch eine Veränderung der Drossellänge der Drosselstelle (h) stufenlos verändert mit Hilfe von auf die Dosierelemente (10, 11) wirkende Veränderungen der Differenz der hydraulischen Drücke in der Kammer (17), die der Kolbenstange (1) gegenüber liegt, und der Kolbenstangenkammer (18) in der Art und Weise, dass sich die Durchlassfähigkeit der Drosselstelle bei der Erhöhung der Belastung auf den Stoßdämpfer verringert.

## Claims

1. Method of regulating the hydraulic resistance of a shock absorber during the working process, which method includes a forced overflow of the operating liquid through small cross sections of passage (6, h) from the chamber (17) opposite the piston rod (1) to the piston rod chamber (18) and back,
**characterized in that** for one flow direction a throttle point (h) having a throttle cross section and infinitely variable flow resistances is created, which is achieved through the use of mutually shifting dosing elements (10, 11), and that infinite variation of the flow resistances is realized by varying the throttle length of the throttle point (h) with the aid of variations of the difference of the hydraulic pressures in the chamber (17) lying opposite the piston rod (1) and in the piston rod chamber (18), which variations act upon the dosing elements (10, 11) in such a way that the ability to pass through the throttle point diminishes as the load upon the shock absorber increases.

## Revendications

1. Procédé de régulation de la résistance hydraulique d'un amortisseur au cours d'un processus de travail, comprenant nécessairement un débordement de liquide de travail à travers de petites sections de passage (6, h) de la chambre (17) en regard de la tige de piston (1) dans la chambre (18) de la tige de piston et en retour,
**caractérisé en ce que**
pour un sens de passage on réalise un point d'étranglement (h) avec une section d'étranglement et des résistances de passage variables de manière continue, obtenues par l'utilisation d'éléments de dosage (10, 11) qui coulissent l'un par rapport à l'autre et
on modifie en continu les résistances de passage par une variation de la longueur d'étranglement du point d'étranglement (h), à l'aide des variations agissant sur les éléments de dosage (10, 11) de la différence des pressions hydrauliques dans la chambre (17) en regard de la tige de piston (1) et de la chambre de tige de piston (18), de façon à diminuer le passage dans le point d'étranglement pour une augmentation de la charge exercée sur l'amortisseur.
